# EUROPEAN PATENT APPLICATION

(11) **EP 1 190 656 A1**
(43) Date of publication of application: **27.03.2002**
(21) Application number: 00870208.6
(22) Date of filing: 20.09.2000
(51) Int. Cl.: A47K 5/12, G01F 11/08, F16K 31/04, F16K 11/07

(54) **A liquid dispenser device**

(71) Applicant: Inter Company Computer, Engineering, Design Services, in het kort : " Concept Design", naamloze vennootschap, 8510 Kortrijk, Marke (BE)
(72) Inventor: Van Marke, Carl, 8510 Kortrijk, Marke (BE)
(74) Representative: Quintelier, Claude

(57) **Abstract**

A liquid dispenser device, having a linear actuator comprising a rod and provided to apply a linear movement on a dispensing member, such as a soap dispenser or a water dispenser. The linear movement being controllable in order to accurately control the output of the liquid.

## Description

The present invention relates to a liquid dispenser device, in particular a soap dispenser, comprising a pumping member operated by a driving element and having an input and an output for receiving and supplying said liquid.

Such a liquid dispenser device is known from the French patent application FR 2 669 205. In the known device the pumping member is formed by a piston pump having a cam as driving element. The movement of the cam causes the piston to be pushed into a cylinder thereby pressing the liquid soap out of the cylinder. The return movement of the piston is realised by a spring applied on the piston. The spring being compressed by the force applied by the cam on the piston. The resilient force of the spring causing the piston to return to its initial state, thereby pumping soap from a reservoir into the cylinder.

A drawback of the known liquid dispenser device is that the spring and the piston are in direct contact with the soap. As liquid soap generally has a high pH value (pH > 9), the direct contact of the soap with the piston and spring aggresses the latter. Furthermore liquid soap can dry up, causing agglomerations on the piston and the spring and thus leading to malfunction. Finally, the cam which controls the movement of the piston does not enable to easily modify the amount of liquid to be supplied. Therefore, it would be necessary to either modify the dimension of the cam or displace the cam.

An object of the present invention is to provide a liquid dispenser device where the amount of liquid to be dispensed is easier to dose.

A liquid dispenser device according to the present invention is therefore characterised in that said pumping member comprises a suction cup and wherein said driving element is formed by a linear actuator comprising a rod, said suction cup being connected to said rod, said actuator being provided to impose a first linear movement on said rod in a first direction for applying a pushing force on said suction cup and to impose a second linear movement on said rod in a second direction, opposite to said first direction, for applying a pulling force on said suction cup. The use of a linear actuator imposing a linear movement on the rod enables a linear control which is reliable and precise. Since the rod acts on a suction cup, a precise displace movement is imposed on the suction cup, thus enabling a precise amount of liquid to be dosed by means of the suction cup. Moreover, the use of a first and a second movement enables to apply a different pushing and pulling force. So, for example, a quick supply of the liquid could be realised by having a high pressing force. The subsequent pulling force could then be weaker as generally more time is available to fill up the space delimited by the suction cup.

A first preferred embodiment of a liquid dispenser device according to the invention is characterised in that said actuator comprises a control member provided to control a distance over which said first and second linear movement extend. As the distance of the applied movement corresponds to the distance over which the suction cup is moved, that distance corresponds to the quantity of liquid supplied. Thus by controlling the distance of the movement, a precise quantity of liquid can be supplied.

A second preferred embodiment of a liquid dispenser device according to the invention is characterised in that said actuator is formed by an electric motor having a threaded rotor co-operating with said rod. Since the rod is thus coupled to a threaded rotor, the distance to be travelled by the rod can simply be controlled by controlling the number of revolutions imposed to the rotor.

A third preferred embodiment of a liquid dispenser device according to the invention is characterised in that said suction cup is made of neoprene rubber. This material resists well to liquid soap.

Preferably said suction cup comprises a connection element provided to connect said rod in such a manner that said rod is isolated from an inner volume delimited by said suction cup. In such a manner, the rod is not in direct contact with the liquid, thus avoiding that for example soap aggresses the material of the rod.

Preferably, said connection element is formed by a protrusion applied on an outer face of said suction cup. The protrusion forms an integral part of the suction cup and enables a connection with the rod.

The invention also relates to a liquid dispenser device, in particular a water dispenser, comprising a valve operated by a driving element and provided to be placed in a conduct, said driving element being provided to set said valve in an open or closed state.

Such a liquid dispenser device is characterised in that said driving element is formed by a linear actuator comprising a rod connected to said valve, said actuator being provided to impose, for bringing this valve in its open state, a first linear movement on said rod during a predetermined time period of which, during a first subperiod, said movement has an increasing speed and a second linear movement on said rod, for bringing said valve back in its closed state, said first and second linear movement extending in opposite direction. By increasing the speed of the linear movement during the first subperiod, the water output is increased in order to reach a normal output simulating in such a manner the normal conditions of a user when he manually operates a faucet. This increasing speed avoids the drawback of bi stable latches which abruptly open the valves leading to an instantaneous high output. Moreover, the linear movement applied on the valve enables to open or close the valve not only in its totally open or totally closed state but also in every intermediate state.

The invention will now be described in more detail with reference to the annexed drawings showing a preferred embodiment of a liquid dispenser device according to the invention. In the drawings :
figure 1, 2 and 3 respectively show the dispenser device according to the invention in the state at rest, by application of a pushing force and by application of a pulling force;
figure 4 shows a cross-section through the actuator;
figure 5 shows an exploded view of the pumping member;
figure 6 shows the control member of the actuator;
figure 7 shows the control cycle for controlling the control member in the case of a soap dispenser;
figure 8 shows a control cycle for controlling the control member in the case of a water dispenser; and
figure 9 shows a device for mixing and dispensing warm and cold water according to the invention; and
figures 10, 11 and 12 show a further embodiment of a device for mixing and dispensing warm and cold water according to the invention.

In the drawings a same reference sign has been assigned to a same or analogous element.

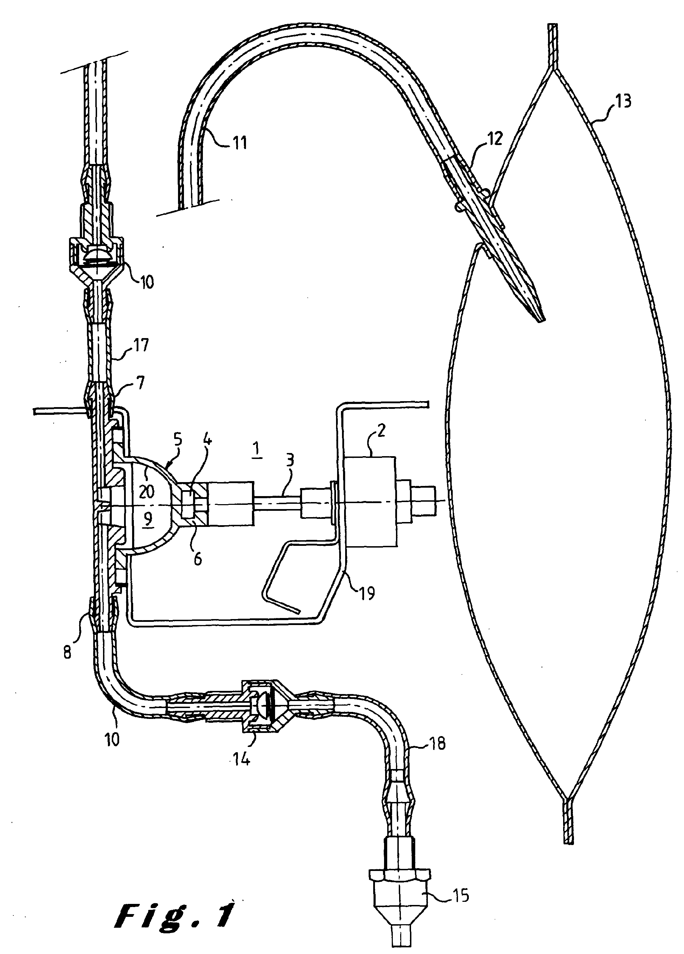

The soap dispenser shown in the figures 1 to 3 comprises an operating member 1, which comprises a pumping member 5, operated by a driving element 2. The latter is formed by a linear actuator comprising a rod 3. The linear actuator is mounted on a support element 19 which also carries the pumping member 5. The linear actuator is described in more detail in US PS 4,841,189 which is hereby incorporated by reference.

The rod 3 comprises an end piece 4, which engages rigidly into a connection element 6 of the pumping member 5 which comprises a suction cup 20 enclosing an inner volume 9. As can be seen in figure 1, the end piece 4 is isolated from the inner volume 9 and surrounded by the material of which the suction cup is made. The connection element forms a protrusion on the outer side of the suction cup in which protrusion end piece 4 engages. In such a manner the end piece is not in direct contact with the liquid, in particular soap which is present in the inner volume 9. As soap is a high alkaline product, it could attack the rod if the latter would be in direct contact with the soap and thus deteriorate the connection between the driving element 2 and the pumping member.

The suction cup 20 is preferably made of neoprene rubber which has sufficient flexibility to resist to repetitive and frequent pushing and pulling operations as will be described hereunder. Moreover, neoprene rubber is also resistant against the alkaline product which is soap.

The pumping member 5 has an input 7 and an output 8. The input is connected via a supply tube 17, preferably made of rubber or plastic to a first one way valve 10. The latter is mounted in such a manner as to enable only a current towards the input 7 of the pumping member 5. The first one way valve 10 is further connected via a supply tube 11, also preferably made of flexible material, with a supply needle 12 applied on a bag 13 containing soap. The bag forms a reservoir for the soap or another liquid to be dispensed.

The output 8 of the pumping member 5 is connected via a supply tube 16 to a second one way valve 14 mounted in such a manner as to enable only a current from the pumping member's output. An output of the second one way valve 14 is connected via a supply tube 18 to a soap outlet element 15. The supply tubes 16 and 18 are also preferably made of flexible material such as rubber or plastic. Of course other materials such as aluminium or copper could also be used for the different supply tubes 11, 16, 17 and 18.

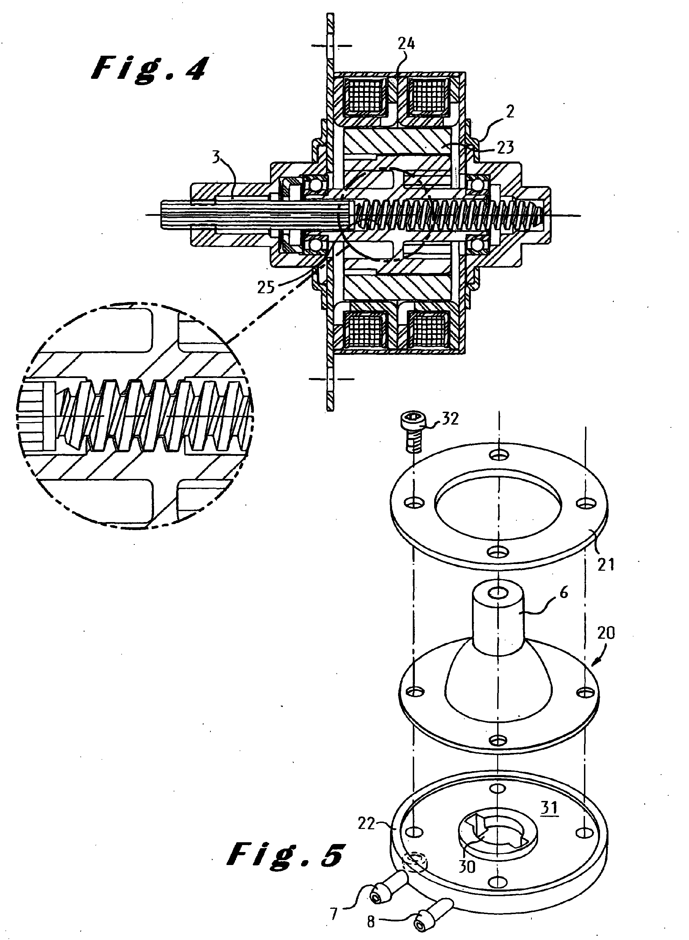

Before describing the operation of the device according to the invention, the driving element will be described somewhat more in detail with reference to figure 4. The motor 2 has at least one outer stator phase assembly 24 of annular configuration disposed concentrically around the outer periphery of the rotor 23. The rotor has a threaded inner side 25 which co-operates with the rod 3 which is also threaded (25).

When electric current is applied to the stator 24, the rotor starts to rotate. As the rotor co-operates with the rod 3, the latter starts to move linearly. The threads applied on rotor and rod, cause the rod to execute a linear movement. The rod is as if to say screwed and unscrewed with respect to the rotor. As the rotation, and thus the linear movement of the rod is controlled by the rotation of the rotor, which is on its turn controlled by the current applied to the stator, the movement of the rod is accurately controlled by the amount and direction of current applied to the stator.

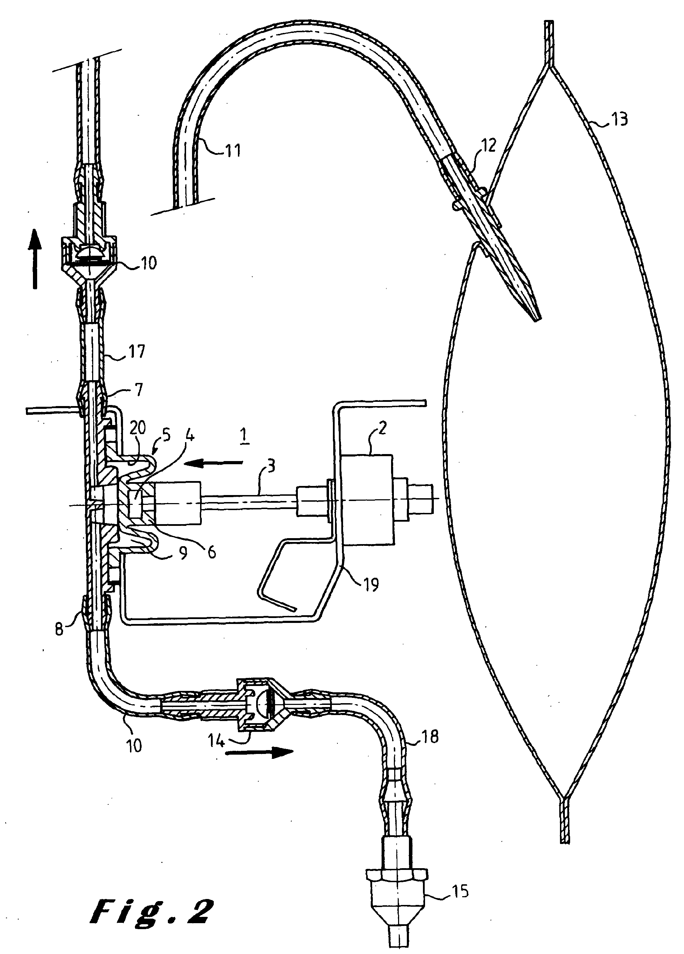

So by applying current to the motor 2, a linear movement is imposed on the rod 3. Since the rod 3 is connected to the suction cup 9, the movement of the rod is transmitted to the suction cup. By having the current flowing in a first direction through the windings of the stator, a first linear movement in a first direction, for example unscrewing with respect to the rotor, is applied to the rod. This first linear movement causes the rod to apply a pushing force on the suction cup as illustrated in figure 2. The outgoing movement of the rod with respect to the motor causes a compression of the suction cup, due to the rigid connection between the rod and the pumping member.

The pushing applied by the rod on the suction cup causes the liquid, in particular the soap, present in the inner volume of the suction cup to be pushed towards the output 8. The overpressure applied within the pumping member by the pushing on the suction cup, causes the one way valve 10 to close and the one way valve 14 to open. As the one way valve 14 is now open and the liquid is pushed out of the inner volume of the suction cup, liquid flows via the output 8, the one way valve 14 towards the outlet element 15.

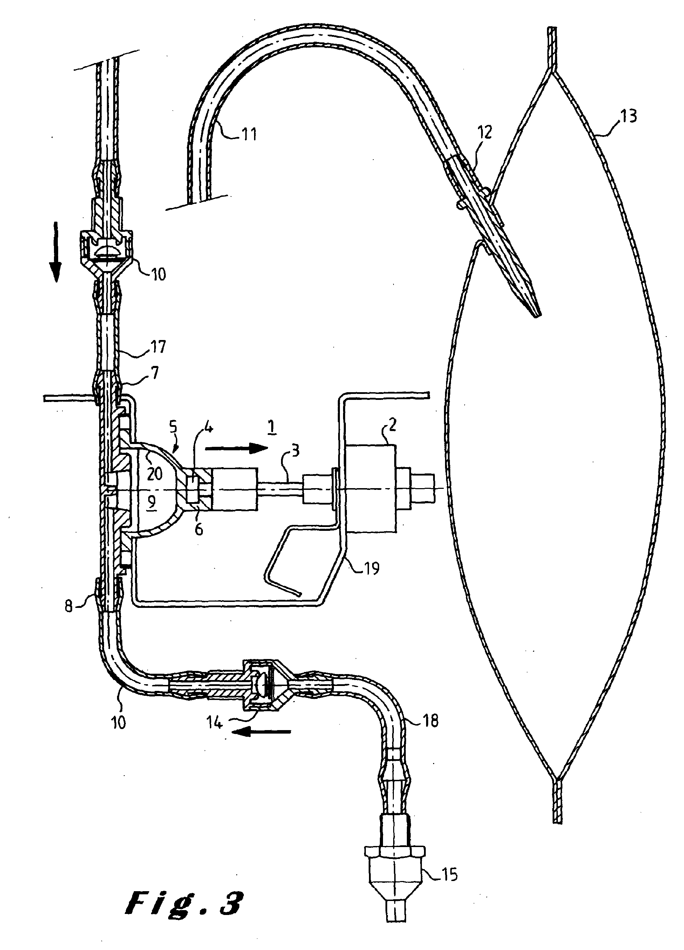

Once the first linear movement is accomplished, the direction of the current supplied to the stator is inverted in order to start a second linear movement of the rod in a second direction opposite to the first direction. Due to that second linear movement, the rod is screwed in the motor and returns to its original position. During that second linear movement, the rod applies a pulling force on the suction cup causing the latter to return to its rest position as illustrated in figure 3. By applying a pulling force on the suction cup, an underpressure is created within the pumping member, causing the closure of the one way valve 14 and the opening of the one way valve 10. Soap can thus be pumped from the bag 13 and flow via the one way valve 10 and the input 7 into the inner space of the suction cup. In such a manner, the inner space is again filled with soap and a subsequent cycle can be started. The fact that the one way valve 14 is closed prevents the soap to flow towards the outlet element 15.

As a force is applied on the suction cup and as soap is stored in the inner space enclosed by the suction cup, it is important that the pumping member has a rigid and tight construction. As illustrated in figure 5, the membrane forming the suction cup 20 is placed on a base element 22 having an annular outer part 31 on which the base of the suction cup rests. The annular outer part delimits an inner part 30 which is in connection with the in- and output 7, 8 of the pumping member. That inner part faces the inner space of the suction cup. The base part of the suction cup is sandwiched between the annular outer part 31 and a ring 21. Fixing elements 32, such as nuts and bolts, fix the suction cup, the base part and the ring 21 together.

The base element 22 is preferably made of rigid material in such a manner as to provide a solid support for the membrane. By using rigid material for the base element, the pushing force applied on the suction cup is practically totally used for compressing the membrane and nearly no force is lost.

Preferably the motor is activated by a sensor sensing the proximity of the user, such as for example an infrared sensor.

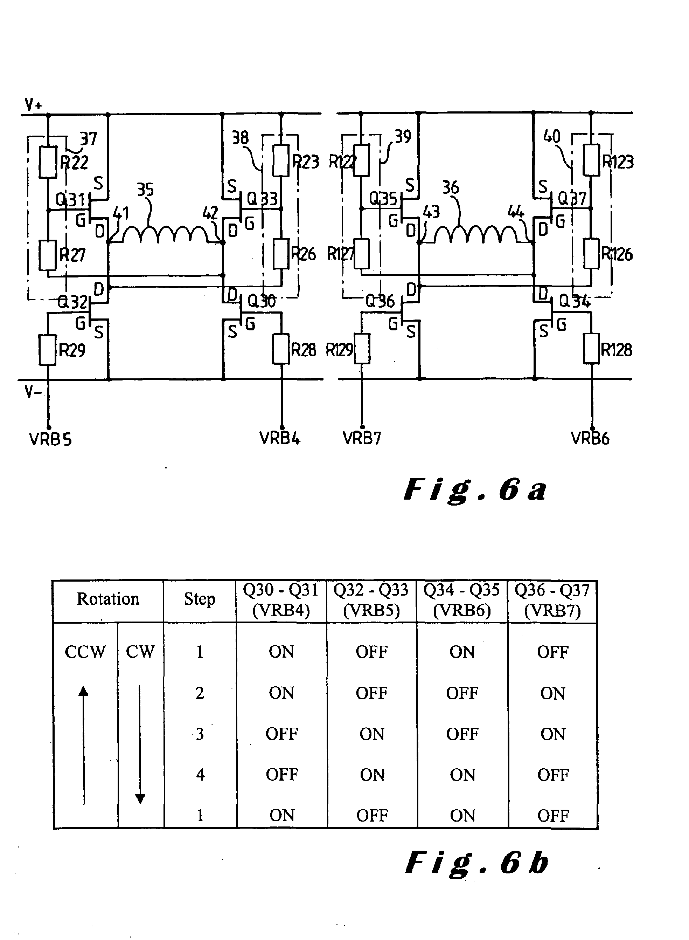

Figure 6 a) shows the control member of the driving element. The stator comprises two coils 35 and 36. Each coil is connected with the drains of four MOS-FET transistors (Q30-Q33 resp. Q34-Q37). The transistors are mounted in cascade two by two and form each time with the coils an H-bridge. The transistors are mounted in such a manner that the drains of two transistors in a same cascade are connected to each other. The sources of the transistors are mounted to the poles of a DC power supply (not shown). The sources of the P channel type transistors Q31, Q33, Q35 and Q37 are mounted to a positive pole V+ and the sources of transistors N channel type Q32, Q30, Q36 and Q34 are mounted to a negative pole V-. The gates of the transistors Q32, Q30, Q36 and Q34 are connected via a respective resistance R29, R28, R129 and R128 to control inputs VRB 5, VRB4, VRB7 and VRB 6 to which control signals are applied. The gates of the transistors Q31, Q33, Q35 and Q37 are connected to voltage dividers 37, 38, 39 and 40 branched between the positive pole V+ and the drains of transistors Q33, Q31, Q37 and Q35 respectively.

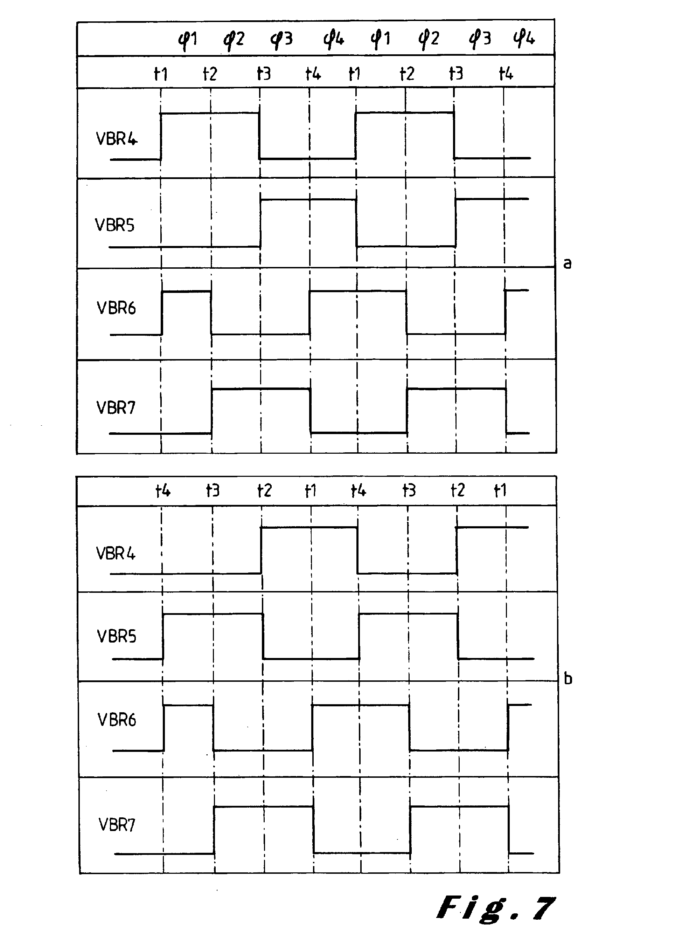

The operation of the motor and thus the movement of the rod will now be described by referring to the figures 6 and 7. Figure 6 b) shows the different operation steps and figure 7 the control pulses applied to the control inputs VRB4 - 7.

Suppose at time t₁, a positive pulse is applied to VBR4 and VBR6. This causes the gate of transistors Q30 and Q34 to become conductive. Current can now flow from V+ via voltage divider 37 respectively 40 to the gate of the transistors Q31 and Q35 so that they become also conductive. This causes that a positive voltage is applied to connectors 41 and 43 of the coils 35 and 36 respectively. Current will thus flow from V+ via transistors Q31 and Q35 through coils 35 and 36, via transistors 30 and 34 to V-. As current flows from 41 respectively 43 to 42 respectively 44 in the coils, a magnetic field will be induced in the stator causing the rotor to turn clockwise (cw) over a predetermined angle during a first release of the cycle. Since the rotor is connected to the rod, the rod will start to rotate and starts its linear movement in the first direction.

At t2 VBR4 is still high, but VBR6 will go down whereas VBR7 goes high. Consequently Q30 and Q31 remain conductive and coil 1 still receives current. However, since VBR6 has gone down, Q34 will block and so will Q35 as current can no longer flow from V+ via Q34 to V-. Consequently current will still flow into coil 35. The application of a high signal on VBR7 will render Q36 and Q37 conductive so that current will now flow in the opposite direction i.e. from 44 to 42 into coil 36.

At t3 VBR7 remains high, VBR4 goes down and VBR5 goes high. Because VBR4 has gone down, transistor Q30 and Q31 are switched off and connector 41 of coil 35 is disconnected from V+. As VBR5 is high, transistor Q32 and Q33 are switched on. Current can now flow from V+ via Q33 through coil 35 and Q32 to V-. Both coils are now biased in a same direction.

At t4, VBR6 goes high again and VBR7 goes down. This causes transistors Q34 and Q35 to become conductive and transistors Q36 and Q37 to be blocked. Current will thus flow in coil 35 from 42 to 41 and in coil 36 from 43 to 44, so that they are again opposite biased. As the cycle comprises only four phases ϕ₁, ϕ₂, ϕ₃ and ϕ₄, the cycle is repeated after ϕ₄.

So during the four phases of a cycle each coil has two logic states i.e. the current direction changes during that cycle. As those logic states for each coil do not occur at a same time, four logic states are in fact created for both coils 35 and 36. By applying those logic states in the sequence as set forth here above, the rotation of the rotor and thus of the rod is totally controlled. Each phase and consequently each cycle thus correspond to a well defined rotation angle of the rotor and thus to a well defined distance travelled by the rod. So, as the distance travelled by the rod can be precisely controlled, the pushing or pressing force applied on the suction cup can be precisely controlled. The total distance to be travelled by the rod will then be determined by the number of phases during which the motor will be activated. As the total distance corresponds to the force and thus the displacement imposed on the suction cup, a precise control of the amount of liquid supplied is obtained.

The sense of the rotation of the rotor and thus the application of a pushing or pulling force on the suction cup is determined by the pulses VBR 4 - 7 applied on the circuit illustrated in figure 6 a). Figure 7 a) illustrates the pulses for a clockwise (cw) rotation whereas 7 b) illustrates the pulses for a counter clockwise (ccw) rotation. In view of the analogy with figure 7 a), the sequence illustrated in figure 7 b) will not be described in detail and the skilled person will understand that if the sequence as illustrated in 7 b) is applied on the control circuit of the stator, a counter clockwise rotation is obtained.

Depending on the way the rod is threaded, a clockwise respectively a counter clockwise rotation will correspond to the first respectively the second linear movement of the rod.

The rotor can rotate either at a constant speed or at a variable speed. Rotating at a variable speed is particularly suitable when the device is used for supplying water. A too high speed could cause a sudden water supply which could surprise the user and make his cloths wet, whereas a too slow speed would cause an insufficient water supply.

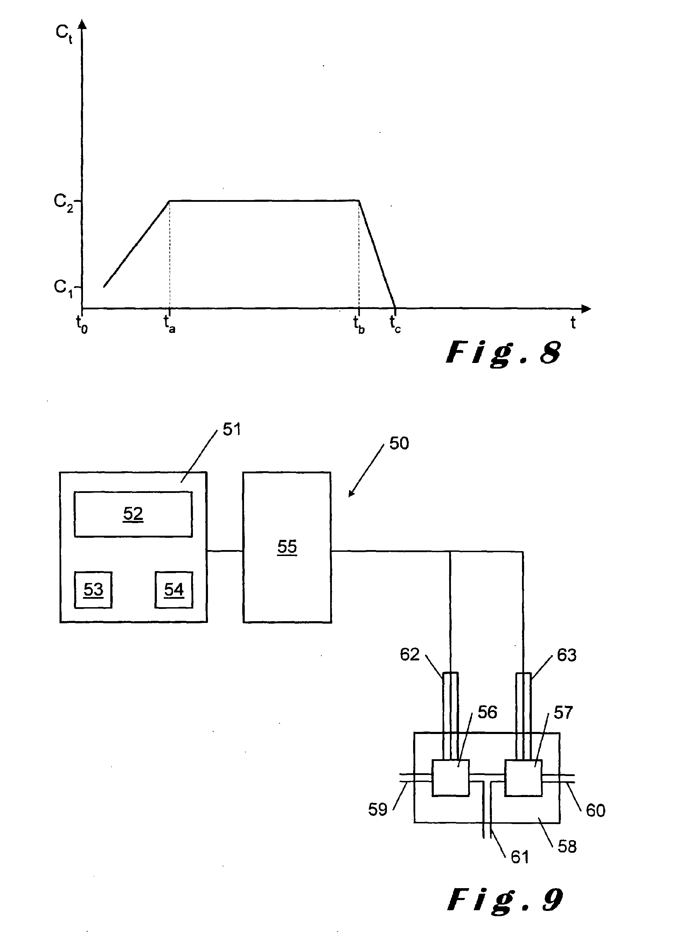

The variation of the rotor speed can, in the device according to the present invention, be obtained by pulse width modulation. Instead of using control pulses VBR4-7 of equal phase, the phase duration of the pulses can vary over the subsequent cycles. Figure 8 illustrates how such a speed control can be obtained. During a first time frame t₀-tₐ, the phase duration increases from a value C₁ to C₂. This signifies that for each subsequent cycle, the phase duration has each time increased, thus giving more energy to the rotor. In such a manner, the rotor increases its speed over each cycle. When sufficient speed has been reached, the phase duration remains constant for each cycle i.e. during the time frame tₐ-t_{b} which is the period during which the user washes his hands and where he needs sufficient water. In the time frame t_{b}-t_{c}, the speed reduces in order to slow down the movement of the rod. This is obtained by decreasing the phase duration of the cycles.

So, when applied on a water dispenser during a first time frame t₀-tₐ, when the water dispenser is opened starting from its closed state, the speed of the first linear movement increases, causing the water output to increase. Moreover, as a slow speed offers a larger torque, this larger torque will enable to overcome the initial reactive force of the valve placed in the water supply. Once the valve is somewhat open and less torque is required, i.e. during time frame tₐ-t_{b}, the speed of the linear movement remains constant and the valve is further opened in order to reach its open state. When the open state is nearly reached, the speed slows down in order to stop the linear movement. The water dispenser is closed by applying a second linear movement which either may be with constant speed or with a variable, analogously with the first linear movement.

The device according to the invention can also be used for mixing warm and cold water. The amount at which the warm water and the cold water valve are opened, can be determined by the distance of the first movement for each of the valves. In such a manner, a precise dosage of warm and cold water can be determined.

Figure 9 shows a device 50 for mixing and dispensing warm and cold water according to the invention. The device comprises a faucet 58 having a cold 59 and warm 60 water input. Those inputs are respectively connected with a first 56 and second 57 valve each operated by a linear actuator 62 respectively 63. An output of the valves is connected with the water output 61 of the faucet.

The device further comprises a control unit 55, connecting the actuators 62 and 63 with a temperature input unit 51. The latter comprises for example a display 52 and two control buttons 53 and 54 for increasing respectively decreasing the temperature. The selected temperature is displayed on display 52. The control unit 55 is provided to convert the input temperature into control signals for the linear actuators 62 and 63. Preferably, the control unit also comprises a sensor for sensing the temperature of the supplied cold and warm water.

When the user has indicated the temperature of the water, the control unit determines in function of that temperature and, if provided, of the sensed temperature of the supplied cold and warm water, the distance over which the first linear movement to be applied by the actuators should extend. Once this distance determined, the control unit starts to generate control pulses in order to supply to the control members of the actuators 62 and 63 pulses VRB which will control the rotation of the rotor and thus the rod. In such a manner, the valves of the cold and warm water supply will be opened to mix cold and warm water in such a proportion as to obtain the indicated temperature. For closing the valves, the control unit will determine second linear movements to be imposed on the rods of the first and second actuator, which second movements will have a corresponding distance as those of the first movements but in opposite direction.

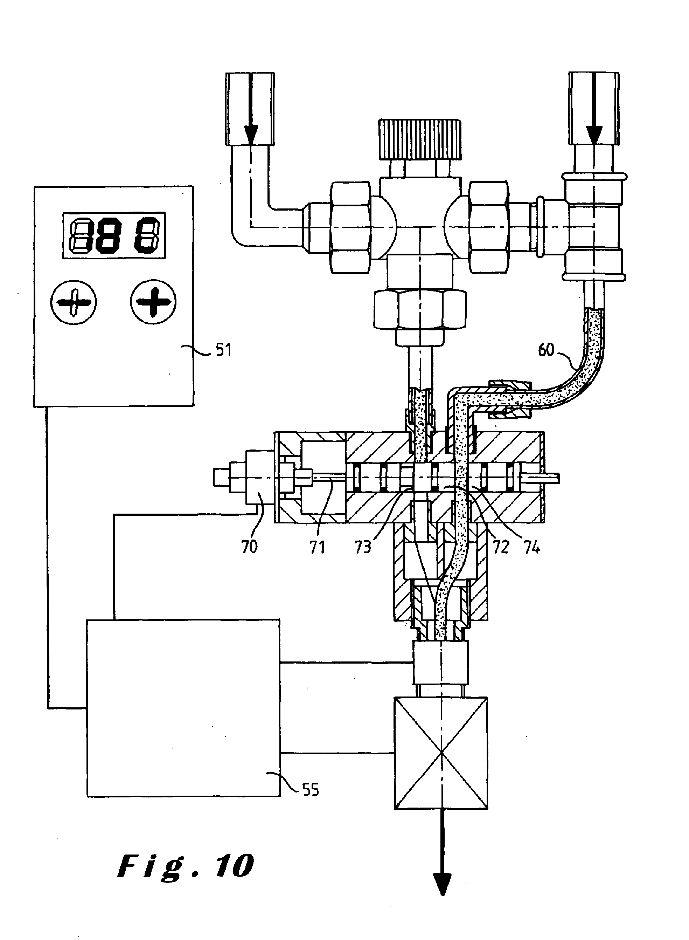

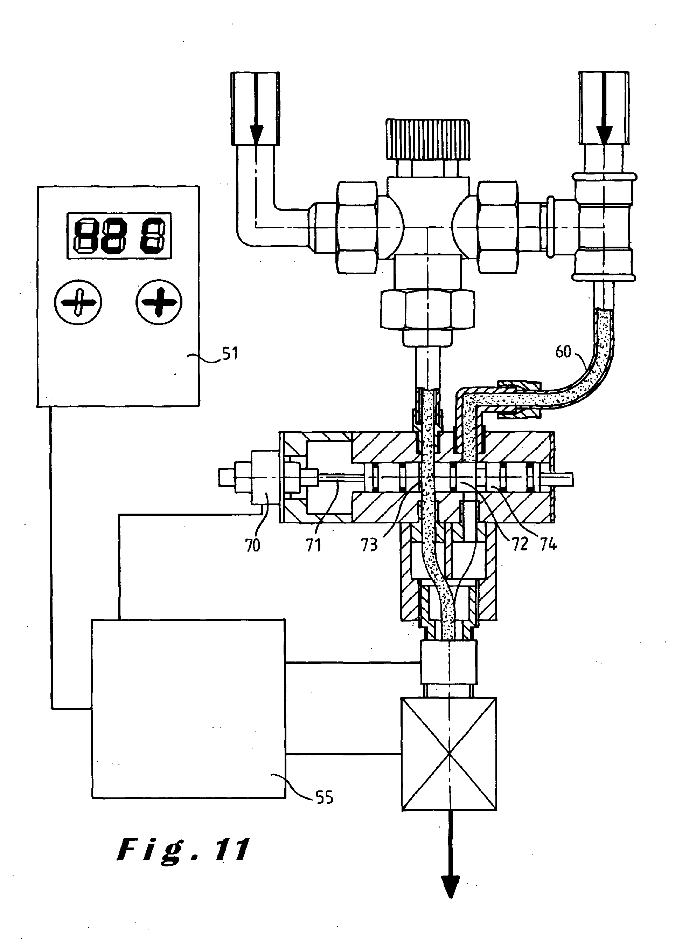

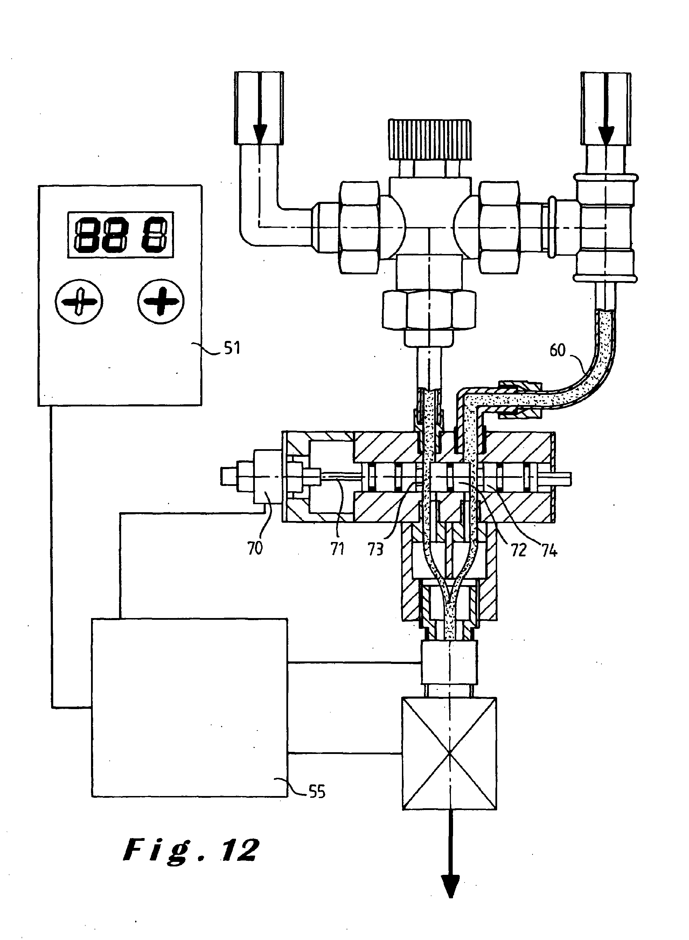

Figures 10, 11 and 12 show another embodiment for mixing and dispensing warm and cold water according to the invention. This embodiment distinguishes from the one illustrated in figure 9 in that instead of two linear actuators only one actuator 70 is used. The rod 71 of the linear actuator 70 is connected to a regulation member 72 placed in the warm and cold water conduct 73, 74 respectively. The linear movement of rod 71 causes the regulation member 72 to shift in a horizontal direction. In such a manner one of the conducts 73, 74 is opened wider whereas the other is more closed, causing a higher flux in the one conduct and a lower in the other. The proportion of cold and warm water is thus changed causing the temperature of the output water to change. The control unit 55 is consequently provided to determine a signal for actuator 70 only. As illustrated in figure 10, where only cold water is delivered, the regulation member 72 closes conduct 73 and conduct 74 is totally open. When only warm water is supplied (figure 11) the actuator has shifted the regulation member in order to open conduct 73 and close conduct 74. In case of a mixture (figure 12) of cold and warm water, the regulation member opens both conduct somewhat.

## Claims

1. A liquid dispenser device, in particular a soap dispenser, comprising a pumping member operated by a driving element and having an input and an output for receiving and supplying said liquid, **characterised in that** said pumping member comprises a suction cup and wherein said driving element is formed by a linear actuator comprising a rod, said suction cup being connected to said rod, said actuator being provided to impose a first linear movement on said rod in a first direction for applying a pushing force on said suction cup and to impose a second linear movement on said rod in a second direction, opposite to said first direction, for applying a pulling force on said suction cup.

2. A liquid dispenser device as claimed in claim 1, **characterised in that** said actuator comprises a control member provided to control a distance over which said first and second linear movement extend.

3. A liquid dispenser device as claimed in claim 1 or 2, **characterised in that** said actuator is formed by an electric motor having a threaded rotor co-operating with said rod.

4. A liquid dispenser device as claimed in any one of the claims 1 to 3, **characterised in that** said suction cup is made of neoprene rubber.

5. A liquid dispenser device as claimed in any one of the claims 1 to 4, **characterised in that** said suction cup comprises a connection element provided to connect said rod in such a manner that said rod is isolated from an inner volume delimited by said suction cup.

6. A liquid dispenser device as claimed in claim 5, **characterised in that** said connection element is formed by a protrusion applied on an outer face of said suction cup.

7. A liquid dispenser device as claimed in any one of the claims 1 to 6, **characterised in that** said pumping member comprises a rigid base element on which said suction cup is applied.

8. A liquid dispenser device as claimed in any one of the claims 1 to 7, **characterised in that** said input and said output of said pumping member are connected to respective conducts wherein a one way valve is applied.

9. A liquid dispenser device, in particular a water dispenser, comprising a valve operated by a driving element and provided to be placed in a conduct, said driving element being provided to set said valve in an open or closed state, **characterised in that** said driving element is formed by a linear actuator comprising a rod connected to said valve, said actuator being provided to impose, for bringing this valve in its open state, a first linear movement on said rod during a predetermined time period of which during a first subperiod said movement has an increasing speed and a second linear movement on said rod, for bringing said valve back in its closed state, said first and second linear movement extending in opposite direction.

10. A liquid dispenser device as claimed in claim 9, **characterised in that** said second movement has a decreasing speed.

11. A device for mixing and dispensing warm and cold water, comprising a cold and a warm water input, said inputs being connected to a first and second valve respectively, each valve being operated by a first and respectively second driving element provided to set the valve in an open or closed state, **characterised in that** each driving element is formed by a linear actuator comprising a rod connected to its respective valve, each actuator being provided to impose, for bringing its respective valve in its open state, a first linear movement on the rod and a second linear movement on the rod for bringing the valve back in its closed state, said first and said linear movement extending in opposite direction, said device having a temperature input for receiving a water temperature which temperature input is connected to a control unit, provided to determine a distance over which said first movement extends for said first and second driving element in function of said water temperature, said control unit being connected to said first and second driving element.

12. A device for mixing and dispensing warm and cold water, comprising a cold and a warm water input connected to a cold and a warm water conduct respectively, a regulation member being applied in said cold and warm water conduct for regulating the flux of output water, **characterised in that** said regulation member is connected via a rod to a linear actuator provided to impose a linear movement on the rod in order to shift said regulation member, said device having a temperature input for receiving a water temperature which temperature input is connected to a control unit, provided to determine a distance over which said movement of the rod extends in function of said water temperature, said control unit being connected to said actuator.
